Europäisches Patentamt

European Patent Office

Office européen des brevets

(19)

(11) Numéro de publication : **0 291 379 B1**

(12) **FASCICULE DE BREVET EUROPEEN**

(45) Date de publication du fascicule du brevet :
04.03.92 Bulletin 92/10

(51) Int. Cl.⁵ : **B60Q 1/06**

(21) Numéro de dépôt : **88401037.2**

(22) Date de dépôt : **28.04.88**

(54) **Dispositif de commande d'orientation à organe de réglage pour projecteur de véhicules automobile.**

(30) Priorité : **28.04.87 FR 8705993**

(43) Date de publication de la demande :
**17.11.88 Bulletin 88/46**

(45) Mention de la délivrance du brevet :
**04.03.92 Bulletin 92/10**

(84) Etats contractants désignés :
**DE ES FR GB IT**

(56) Documents cités :
**EP-A- 0 174 850**
**DE-A- 2 249 694**
**DE-A- 2 339 837**
**DE-A- 2 437 572**
**DE-A- 3 147 938**

(73) Titulaire : **VALEO VISION**
**17, rue Henri Gautier**
**F-93012 Bobigny Cédex (FR)**

(72) Inventeur : **Cantin, Jean-Pierre**
**12, rue du Clos Guiraud**
**F-91530 Saint-Chéron (FR)**
Inventeur : **Itkin, Pavel**
**7, Avenue des Sablons**
**F-91350 Grigny (FR)**
Inventeur : **Wurtzbacher, Michel**
**196, Avenue Claire Menier**
**F-77420 Moisiel (FR)**

(74) Mandataire : **Gamonal, Didier**
**Société VALEO Service Propriété Industrielle**
**30, rue Blanqui**
**F-93406 Saint Ouen (FR)**

EP 0 291 379 B1

## Description

La présente invention concerne un dispositif de commande d'orientation pour projecteur de véhicule automobile, selon le préambule de la revendication 1.

Un tel ensemble est destiné à assurer le calage d'un projecteur de véhicule automobile en fonction de la charge transportée et est décrit dans le document FR-A-2 496 572.

Dans ce document, l'élément de réglage comporte un arbre de réglage faisant saillie axialement par rapport à un couvercle et l'organe accessible de réglage comporte un bouton pour sa manoeuvre ainsi que celle dudit arbre.

C'est compte tenu des règlements, que l'on a prévu une possibilité d'ajustage sur véhicule, notamment en usine, du réglage de base de la position du projecteur à partir de la face arrière du boîtier renfermant le mécanisme d'entraînement de la tige et à l'aide du bouton actionné manuellement. Le bouton traverse une ouverture du boîtier et est porté par celui-ci.

Une telle réalisation est encombrante axialement et complique la réalisation du dispositif de commande. En outre, le réglage est mal aisé. En effet, bien souvent la batterie est disposée au voisinage de l'un des projecteurs, en sorte que la place disponible entre le bouton de réglage et la batterie est faible et qu'il n'est pas aisé de passer la main. Il en est d'autant plus ainsi que la présence du moteur limite encore les possibilités d'accès. Le même problème peut se poser pour l'autre projecteur, d'autres accessoires pouvant gêner le réglage.

La présente invention a pour objet de pallier ces inconvénients et donc de créer un dispositif de commande à réglage initial axialement compact, de réalisation plus simple et d'un réglage plus aisé, tout en procurant d'autres avantages.

Suivant l'invention, un dispositif de commande du genre précité est caractérisé en ce que, en combinaison :

a) l'organe de réglage traverse une ouverture pratiquée dans la face latérale du boîtier ;
b) l'organe de réglage est disposé tangentiellement par rapport à une bague de réglage logée dans le boîtier et constituant l'élément de réglage ;
c) l'organe de réglage présente une portion filetée tandis que la bague de réglage présente extérieurement des dentures, lesdites dentures et ladite portion filetée étant conformées pour former un système à roue et vis sans fin irréversible ;
d) la bague de réglage entoure la tige et est en prise avec celle-ci par des moyens de liaison en rotation autorisant un déplacement axial relatif de la tige par rapport à la bague de réglage.

Grâce à l'invention, le réglage de base est réalisé au niveau de la face latérale du boîtier, en sorte qu'aucun bouton de réglage n'est en saillie par rapport à la face arrière du boîtier et que le dispositif de commande est axialement plus compact et plus simple.

On notera que la batterie, la carrosserie et/ou tous autres accessoires, peuvent venir au plus près de la face arrière du boîtier.

On appréciera que le réglage peut être réalisé manuellement, l'organe de réglage pouvant avoir une tête en forme de bouton molleté, mais avantageusement le réglage peut être réalisé à l'aide d'un robot, la tête de l'organe de réglage étant conformée en conséquence. Elle peut être creuse et être logée dans une gorge.

En effet, alors qu'antérieurement il était difficile, notamment à cause de l'environnement, de réaliser un réglage automatique, grâce à la disposition selon l'invention, l'organe de réglage est accessible aisément, il peut par exemple être disposé verticalement, et sa tête peut être à six pans creux, à encoches, à empreintes cruciformes ou analogues pour coopération avec le robot. On notera que l'on peut loger l'organe de réglage et la bague de réglage globalement dans le volume hors tout du boîtier.

De plus, la bague de réglage, en fonctionnement normal, est immobilisée en rotation du fait qu'un système à roue et vis sans fin est irréversible. L'organe de réglage a ainsi une double fonction, l'une de réglage, l'autre de blocage en rotation de la tige entraînant une simplification du boîtier.

Certes il est connu par le document DE-A-2 339 837 un dispositif de réglage avec un organe de réglage traversant une face latérale d'un support d'un moteur à piston et coopérant avec une bague de réglage, en prise sans rotation avec une tige, par l'intermédiaire d'une roue dentée portée par ledit organe de réglage et engrenant avec une roue dentée solidaire de la bague de réglage, mais ce dispositif, outre qu'il n'est pas incorporé à un dispositif de commande à moteur électrique et mécanisme réducteur, est encombrant tant radialement qu'axialement et n'est pas propice à se loger dans le volume hors tout du boîtier d'un dit dispositif de commande à moteur électrique du type sus-indiqué.

De plus, il peut être difficile d'implanter le dispositif de ce susmentionné document dans certaines positions.

Grâce à l'invention, il est par contre possible de disposer verticalement l'organe de réglage ou de manière inclinée du fait qu'il est disposé tangentiellement par rapport à la bague de réglage.

Selon une autre caractéristique, la bague de réglage entoure la tige et est en prise avec celle-ci par l'intermédiaire de tétons portés par l'une desdites pièces et engagés chacun dans une rainure complémentaire portée par l'autre pièce.

Avantageusement c'est la tige qui porte les tétons, deux tétons diamétralement opposés dans une forme de réalisation. Un bon guidage axial de la tige est ainsi réalisé et celle-ci peut être allégée.

Selon une autre caractéristique importante, la bague de réglage n'est dentée que sur une partie de sa périphérie externe et présente une portion dépourvue de dentures, laquelle porte un élément élastique propre à coopérer avec des butées formées dans le boîtier.

Grâce à cette disposition, la partie filetée de l'organe de réglage peut échapper à la bague de réglage en sorte que l'on visse dans le vide et qu'aucune détérioration, notamment du dispositif de commande, ne peut avoir lieu suite à une course excessive de la tige.

De plus, grâce à l'élément élastique, un rappel est effectué en sorte que les filets de l'organe de réglage réengrènent avec les dents de la bague de réglage lorsque l'on tourne ledit organe en sens inverse.

Avantageusement, la bague de réglage est en matière plastique et l'élément élastique consiste en une languette découpée dans la portion non dentée de la bague de réglage.

Dans le cas où c'est l'ensemble du projecteur qui pivote, un problème peut se poser, par exemple en hiver, la tige pouvant rester bloquée. Avantageusement, on prévoit alors que la tige soit en deux parties en étant solidaire d'un piston à double effet à ressort formant un limiteur d'effort horizontal.

Le projecteur ne risque pas ainsi d'être endommagé même si la tige est bloquée, le ressort étant comprimé dans ce cas à partir d'une certaine valeur.

On appréciera que la disposition, selon l'invention, permet le calage axial d'une roue appartenant au mécanisme réducteur à l'aide de la bague de réglage et laisse de la place libre au niveau de la face arrière du boîtier.

On peut alors en profiter pour disposer, coaxialement à la tige, un dispositif à curseurs ou à plots propre à coopérer avec des pistes pour l'alimentation d'un moteur entraînant le mécanisme réducteur.

On appréciera que, dans tous les cas, le boîtier peut être simplifié et être en deux parties, le verrouillage mutuel de celles-ci assurant l'assemblage final.

Les figures en annexe illustrent l'invention en référence aux dessins annexés dans lesquels :
 – la figure 1 est une vue schématique d'un véhicule automobile ;
 – la figure 2 est une vue schématique en perspective d'un dispositif selon un exemple de réalisation de l'invention;
 – la figure 3 est une vue schématique analogue à la figure 2 pour un autre exemple de réalisation de l'invention ;
 – la figure 4 est une vue en perspective éclatée d'un mécanisme de commande selon l'exemple de la figure 3 ;
 – les figures 5 et 6 sont des vues en coupe, certaines partielles, selon les lignes V-V et VI-VI de la figure 4 et après assemblage des deux parties du boîtier;
 – la figure 7 est une vue en coupe selon la ligne VII-VII de la figure 6 ;
 – la figure 8 est une vue analogue à la figure 4 pour une autre variante de réalisation ;
 – la figure 9 est une vue en coupe axiale partielle de la variante de réalisation de la figure 8 ;
 – la figure 10 montre le schéma électrique des figures 4 et 5 ;
 – la figure 11 représente une vue en coupe axiale d'un actuateur ou mécanisme analogue à celle de la figure 9 pour un autre exemple de réalisation ;
 – la figure 12 est une vue en coupe selon la ligne III-III de la figure 11 ;

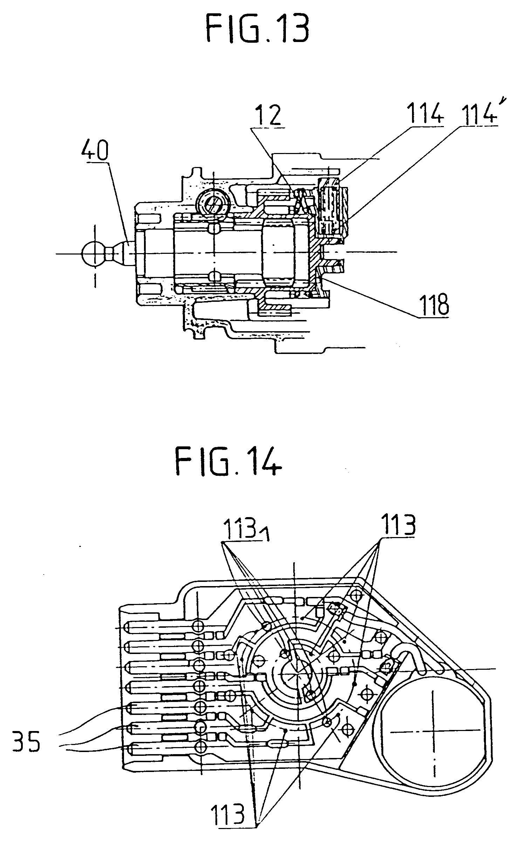

 – la figure 13 est une vue en coupe selon la ligne V-V de la figure 12 ;
 – la figure 14 est une vue en coupe selon la ligne VI-VI de la figure 11 ;
 – la figure 15 est un schéma électrique du circuit de commande ;
 – la figure 16 est une vue en élévation d'un sélecteur de commande ;
 – la figure 17 est une vue en coupe selon la ligne IX-IX de la figure 16 ;
 – la figure 18 est une vue en coupe selon la ligne X-X de la figure 17 ;
 – la figure 19 est une vue en coupe selon la ligne XI-XI de la figure 17.

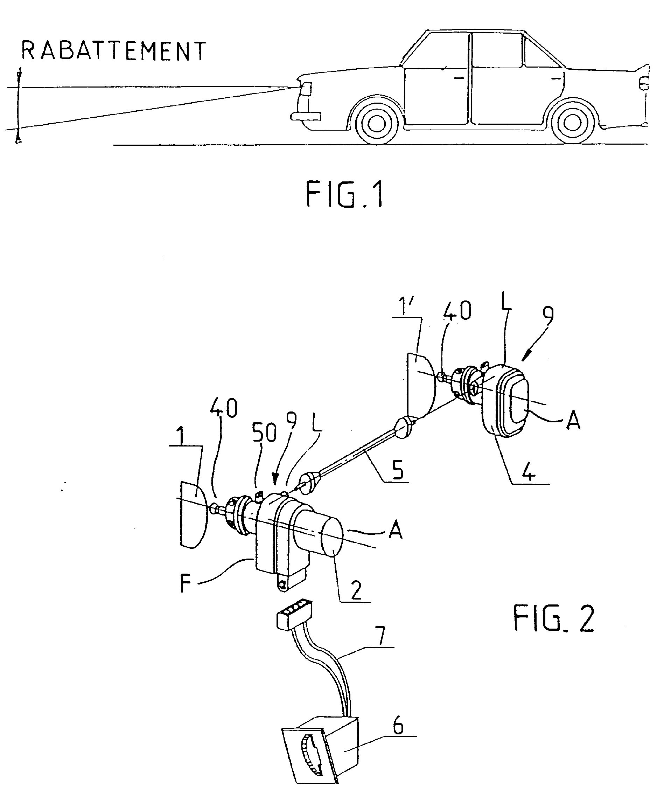

Certaines directives, notamment européennes, réglementent l'inclinaison de la ligne de coupure du faisceau ville (rabattement figure 1) dans des limites pour des états de charge normalisés.

Ceci peut être obtenu, soit par la conception de la suspension, soit par le réglage depuis la planche de bord par le conducteur, ou automatiquement à partir de capteur de position comme décrit dans la demande FR-A-2.496.572.

A la figure 2, on a représenté schématiquement l'une de ces solutions.

Dans celle-ci, le projecteur de gauche 1 du véhicule est commandé par un mécanisme gauche à moteur 2, tandis que le projecteur de droite 1' est commandé par un mécanisme 4 mené par un flexible 5 entraîné par le mécanisme 2.

Le mécanisme 4 est sensiblement identique au mécanisme 2, si ce n'est qu'il ne comporte pas d'actionneur à moteur. Le mécanisme 2 est contrôlé par un sélecteur 6, ou boîtier de commande, qui lui est relié par des câbles 7 ; le sélecteur 6 étant alimenté par la batterie.

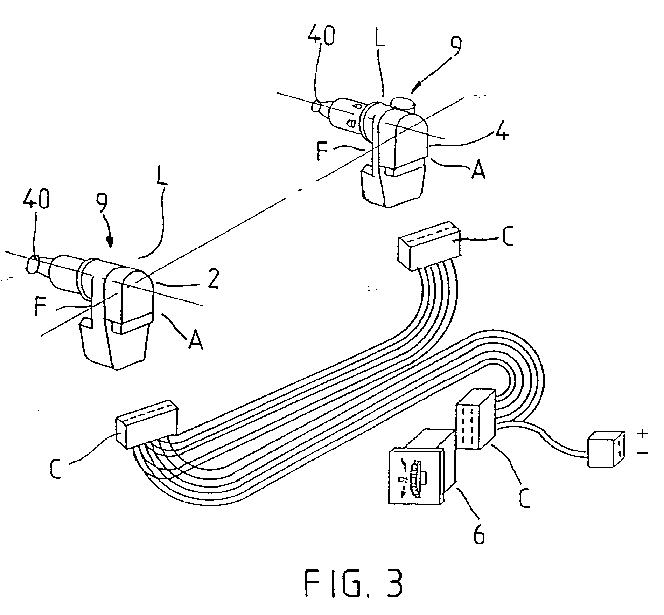

Bien entendu, comme représenté à la figure 3, les mécanismes 2 et 4 peuvent être tous deux à actionneur à moteur contrôlé par une commande unique 6, les liaisons électriques étant à connecteurs étanches C.

Dans tous les cas un mécanisme réducteur 8, décrit ci-après, est logé dans un boîtier 9 à face frontale F et arrière A reliées entre elles par une face latérale L.

Lorsque le moteur est alimenté, le mécanisme 8 entraîne une tige 40, en une ou plusieurs parties, mobile axialement, vers l'une ou l'autre des faces frontale F et arrière A du boîtier 9 décrit ci-après, dont chaque position correspond à une orientation du projecteur.

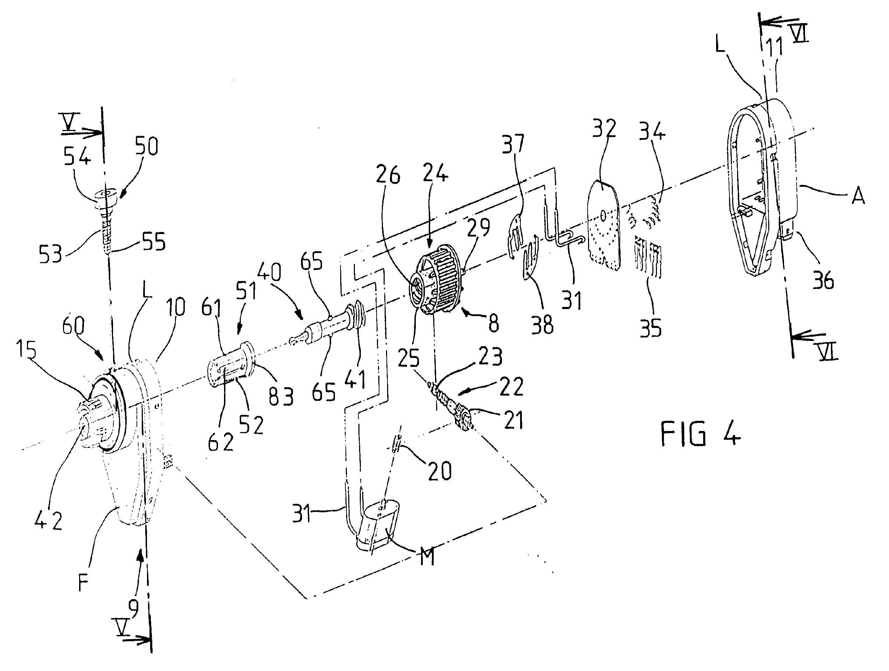

plus précisément (figure 4) le boîtier 9, identique pour chaque projecteur, ici en matière plastique, est en deux parties 10 et 11 assemblées par clipsage, la partie 10 portant des dents 12 s'engageant dans des ouvertures 13 de l'autre partie 11 ; un joint d'étanchéité 14 étant prévu entre les deux parties 10,11.

La partie 10 présente la face frontale F, qui porte un nez de montage 15 cranté servant à la fixation du mécanisme de commande 2,4 ou actuateur ici sur le projecteur.

Le mécanisme réducteur 8 comporte une vis sans fin 20 liée à l'axe d'un moteur électrique M. Cette vis 20 engrène avec une roue 21 d'un organe intermédiaire 22, dont l'extrémité constitue une vis sans fin 23. Cette vis engrène avec une roue creuse 24 de grand diamètre présentant un manchon 25 dont l'alésage interne est fileté en 26.

Avantageusement les organes 20,22,24 du réducteur sont en matière plastique.

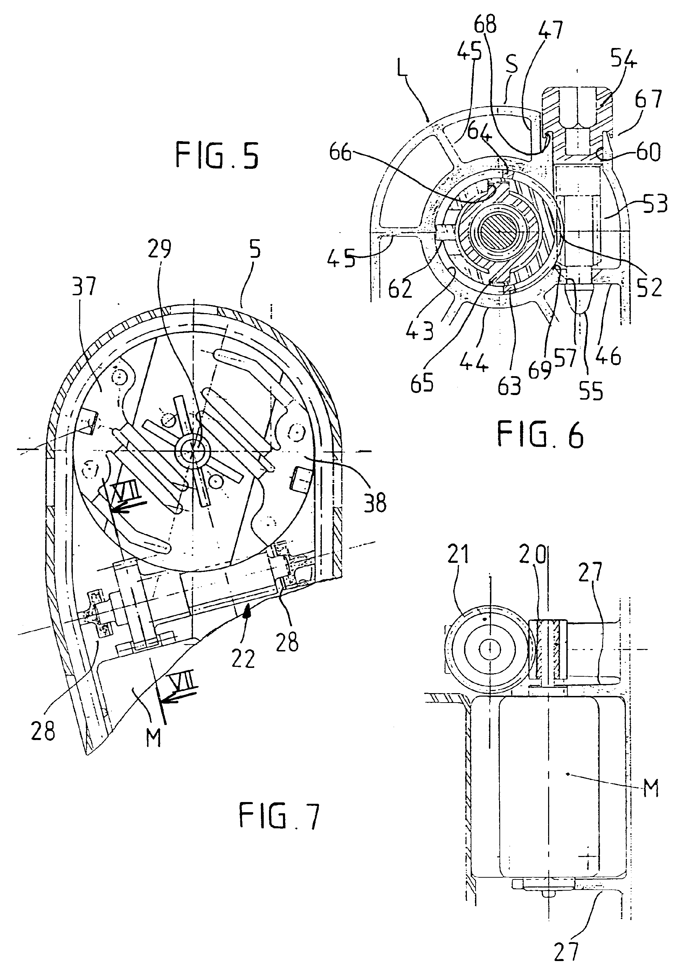

Comme mieux visible aux figures 6 et 7, la partie 10 présente des berceaux 27,28 pour recevoir respectivement le moteur M et l'organe intermédiaire 22.

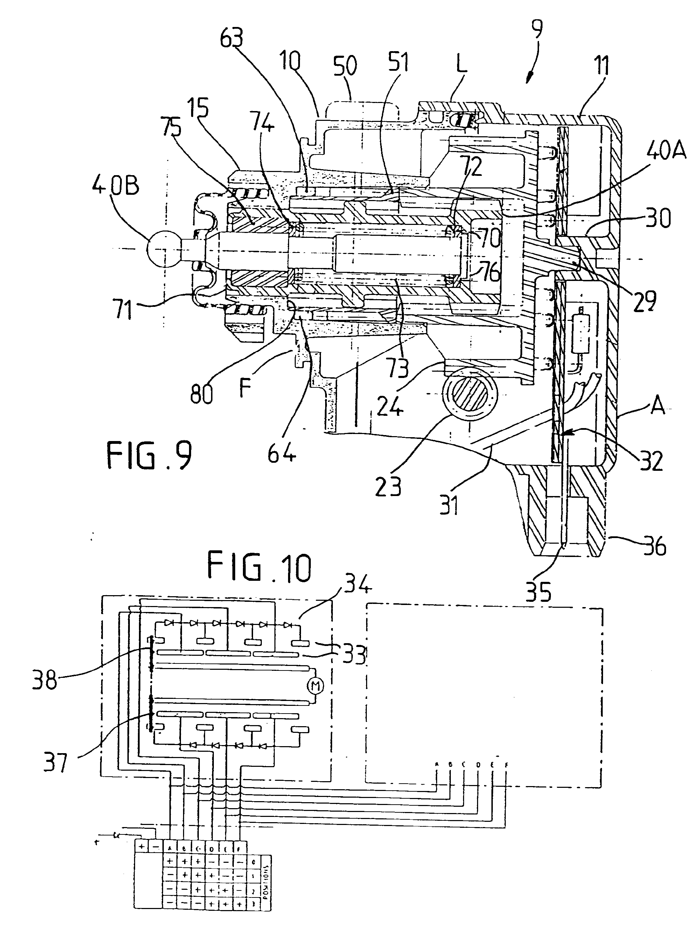

La roue 24 présente un pion 29 pour montage tournant dans un palier 30 (figure 9) solidaire de la face arrière A du boîtier portée par la partie 11. Le moteur M est relié par des fils 31 à une plaque 32 portant des pistes 33 (figure 10), appartenant à un circuit imprimé, et des diodes 34. Les pistes 33 sont reliées à des lames 35 sur lesquelles vient s'engager le connecteur C correspondant de la figure 3. Tous ces éléments appartiennent au circuit d'alimentation et de commande du moteur M. La plaque 32 est dotée centralement d'une ouverture pour le passage du pion 29 de taille inférieure à la tige 40.

On notera que la partie 11 présente transversalement une excroissante 36 creuse, dont le fond constitue un grille permettant le passage des lames 35, le connecteur C venant coiffer l'excroissance.

La roue 24 porte des curseurs 37,38 comportant chacun trois doigts attaquant les pistes 33, pour établissement de contacts électriques et alimentation discrète du moteur M suivant les positions.

Les curseurs 37,38 sont fixés sur la roue 24 simplement par enfoncement, chacun des curseurs 37,38 présentant trois ouvertures, dont une centrale de forme carrée, s'engageant par déformation dans des protubérances de forme complémentaire, que porte la roue 24 à cet effet. On notera l'inclinaison des doigts des curseurs permettant le passage du pion 29.

Le réducteur 8 permet le déplacement linéaire aller-retour d'une tige 40 vers l'une des faces frontale F et arrière A du boîtier 9. A chaque position arrêtée de la tige 40 correspond une orientation angulaire du projecteur.

Dans cette version, la tige 40 est destinée aux véhicules équipés de projecteurs en boîtier (seule la parabole bouge en cas de réglage).

La tige 40 présente une extrémité filetée 41 propre à coopérer avec le filetage 26 de la roue 24 et traverse le nez 15 en étant guidée par l'alésage interne 42 que présente celui-ci. Cet alésage 42 se raccorde à un autre alésage 43 (figure 5) coaxial porté par un manchon 44 solidaire de la partie courante du botier 9 par des nervures 45. En pratique le diamètre de l'alésage 43 est supérieur à celui de l'alésage 42, en sorte qu'il y a formation d'un épaulement 80 (figure 9) au raccordement des deux alésages.

Un organe de réglage 50 de la position initiale du projecteur traverse une ouverture 60 du boîtier 9 en étant porté par celui-ci.

Suivant l'invention, l'organe de réglage 50 traverse la face latérale L du boîtier 9 et coopère avec une bague de réglage 51 logée dans le boîtier 9 et en prise avec la tige 40.

L'ouverture 60 est pratiquée dans la face latérale L du boîtier et la bague de réglage 51 est engagée dans l'alésage 43 et entoure la tige 40 en étant ici traversée par celle-ci.

La bague 51 présente extérieurement des dentures 52 et l'organe de réglage 50 présente une portion filetée 53, une tête 54 et une extrémité 55.

L'organe de réglage 50 et la bague de réglage 51 forment par leur filetage 53 et leurs dentures 52 un système à roue et vis sans fin irréversible, l'organe 50 étant disposé tangentiellement par rapport à la bague 51.

Suivant une caractéristique, la bague 51 n'est dentée que sur une portion de sa périphérie externe, ici environ sur 180°, et elle présente ainsi une portion lisse 61 dépourvue de dents. Cette portion 61 porte un élément élastique 62, ici une languette longitudinale découpée dans ladite portion, la bague 51 étant avantageusement en matière plastique. Cette languette 62 est propre à coopérer avec deux butées 63,64 (figures 5 et 9) portée par la partie 10. Plus précisément la languette 62 forme une protubérance radiale qui est destinée à coopérer avec les butées 63,64 voisines de l'épaulement 80 ainsi qu'avec l'alésage 43.

Ces butées sont globalement diamétralement opposées (figure 5) et peuvent être reliées circonférentiellement ensemble pour former un secteur.

La tige 40 est en prise avec la bague 51 par des moyens de liaison en rotation autorisant un déplacement axial relatif de la tige 40 par rapport à la bague 51. Ces moyens consistent ici en deux tétons cylindriques 65, diamétralement opposés, s'engageant dans des rainures 66 de forme complémentaire formées dans l'alésage interne de la bague 51.

Bien sûr on peut prévoir la disposition inverse, mais ici la tige 40 est métallique et les tétons 65 sont d'un seul tenant avec celle-ci.

Bien entendu, la liaison en rotation peut être réalisée à l'aide de méplats présentés de manière complémentaire par la tige et la bague.

On notera que la languette 62 s'étend à 90° par rapport aux rainures 66 et que l'extrémité de la bague 51 est lisse en regard des butées 63,64.

Comme mieux visible à la figure 5, l'extrémité 55 de l'organe 50 a une forme profilée, ici en forme d'ogive, et se raccorde par une portion cylindrique, de plus faible dimension que la base de l'extrémité, à la partie filetée 53.

L'extrémité 55 traverse une nervure 46, globalement horizontale, appartenant aux nervures 45 reliant le manchon 44 à la face latérale L du boîtier 9.

Cette nervure 46 présente une ouverture évasée 57 de plus faible diamètre que l'extrémité 55.

Ainsi qu'on l'aura compris l'organe 50 peut être monté dans le boîtier 9 par simple engagement axial et clipsage, l'extrémité 55 traversant la nervure 46 et coopérant, après montage, avec celle-ci.

L'ouverture 60 est formée à la faveur d'un embout 67 d'alésage interne cylindrique et par enlèvement de matière dans la portion sommitale S, de section cylindrique, de la face latérale L.

L'embout 67 est solidaire du boîtier 9 et est obtenu de moulage et se raccorde au manchon 44 et à la face latérale L grâce à une paroi annulaire verticale 47.

L'organe 50 est ici une vis, dont la tête 54 présente une partie inférieure évidée en 68 pour coopération avec la portion supérieure de l'embout 67, dont l'extrémité constitue un siège pour ladite partie évidée 68 de la vis 50.

On notera qu'une rainure interrompue existe entre l'embout 67 et la paroi 47 pour montage de la vis.

On appréciera que l'évidement 68 en coopération avec l'embout 67, évite la pénétration des poussières, saletés ou analogues à l'intérieur du boîtier.

La vis 50 est ici en matière plastique et elle s'étend verticalement par rapport au plan de la figure 5 ; Le manchon 44 présentant une lumière 69 pour le passage de la portion dentée 52 venant en prise avec les filets 53.

On notera (figure 4) que la vis s'inscrit globalement dans le contour hors tout du boîtier 9 et que l'évidement 68 ainsi que l'extrémité de l'embout 67 ont une forme tronconique.

Ici la tête 54 est cylindrique et est à six pans creux.

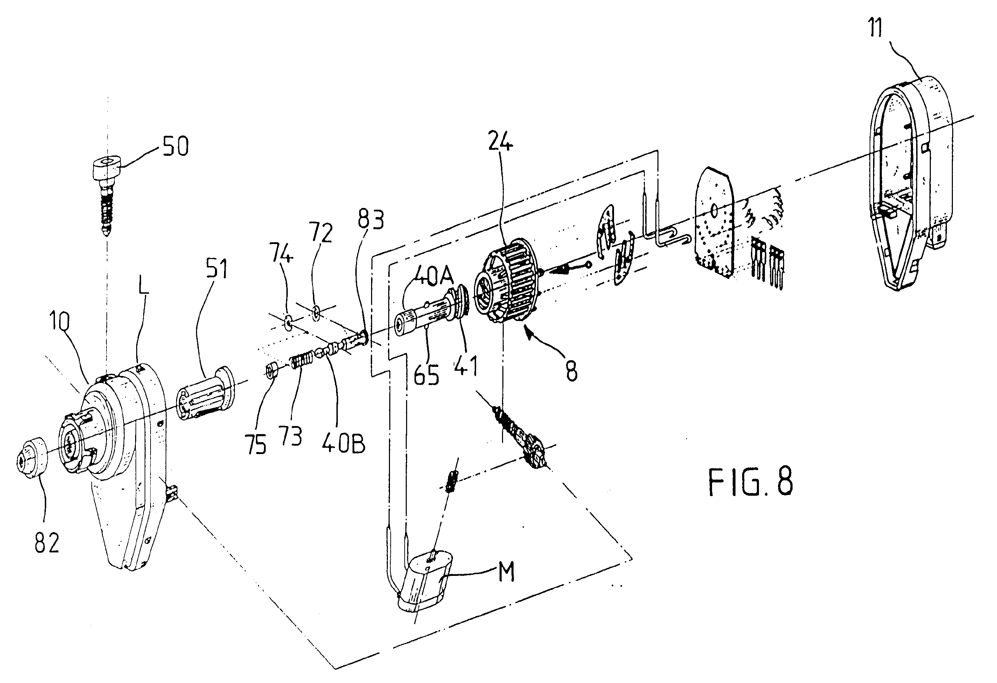

En variante (figure 8 et 9), notamment lorsque le dispositif de commande est destiné aux projecteurs monoblocs, la tige 40 est en deux parties 40A, 40B et comprend un limiteur d'effort horizontal formé par un piston à double effet à ressort.

La portion externe de la partie 40A est semblable à celle de la figure 4 et porte des tétons 65 diamétralement opposés, et une partie filetée 41.

Par simplicité, les éléments communs aux figures 4 et 8 portent la même référence, le boîtier 9 étant de forme identique dans les deux réalisations.

La partie 40A est creuse et présente intérieurement un alésage présentant à chacune de ses extrémités un épaulement 70,71.

L'épaulement 70 s'étend au niveau du filetage 41 et sert de tuteur à une rondelle 72 sur laquelle s'appuie un ressort à boudin 73, dont l'autre extrémité prend appui sur une rondelle 74 maintenue par une bague 75 bloquée par l'épaulement 71 obtenu par sertissage.

La bague 75 et les rondelles 72,74 sont dotées d'ouvertures traversées par la partie 40B sous forme d'une tige guidée par la bague 75 et présentant une tête 76 prenant appui sur la rondelle 72. Le ressort 73 entoure la tige 40B.

On notera que le ressort 73 est monté sous précontrainte, que la rondelle 74 est en forme de C pour son engagement sur une portion cylindrique de diamètre réduit de la tige 40B, les extrémités de ladite portion formant des épaulements pour'la rondelle 74.

Comme mieux visible à la figure 9, un cache-poussières 82 est interposé entre le nez 15 et l'extrémité de la tige 40B. Il en est de même à la figure 4. Sur cette figure 9 on voit en 80 l'épaulement formé au raccordement des alésages 42 et 43 et la disposition de la bague 51, creuse intérieurement, entourant la tige 40. Cette bague 51, après montage, comme à la figure 4, est calée axialement entre l'épaulement 80 et le manchon 25. Pour ce faire, l'extrémité de la bague 51, voisine du manchon 25, présente un épaulement 83 pour coopération avec l'extrémité dudit manchon 25.

On voit que les butées 63 et 64 en saillie radiale par rapport à l'alésage 43 contribuent au positionnement de la bague 51, dont l'épaulement 83 et la languette 62 sont en contact avec l'alésage interne 43. La bague 51 est ainsi bien guidée.

L'alimentation électrique est identique à celle de la figure 4 et est schématiquement représentée à la figure 10.

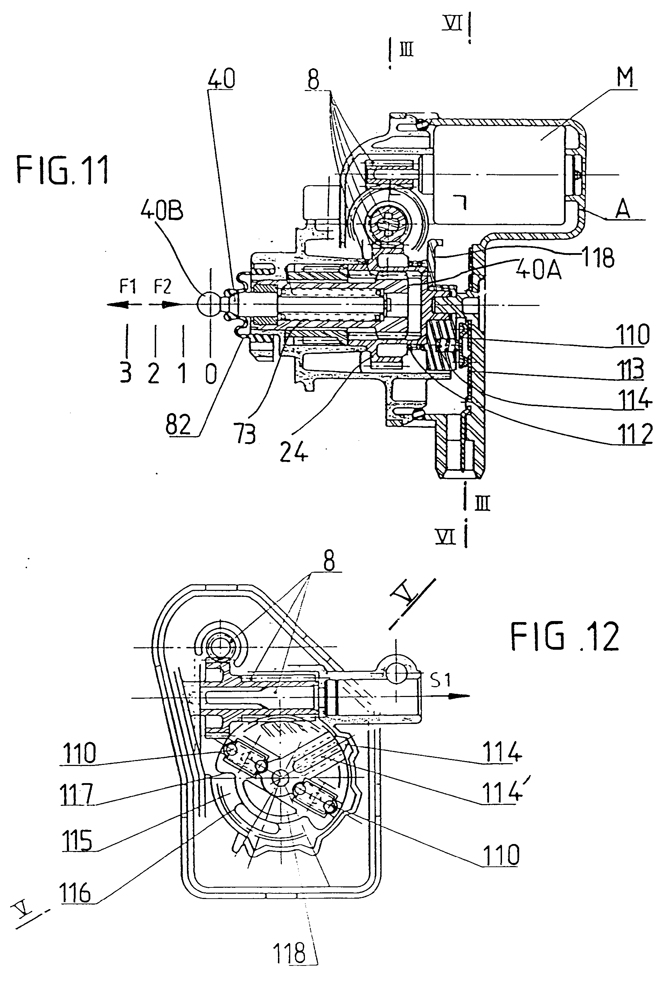

Une telle disposition à piston à double effet à ressort est également présente dans le mode de réalisation de la figure 11 correspondant au schéma de la figure 2.

Dans cette réalisation, deux curseurs 110 dotés chacun de deux plots et leur ressort établissent, suivant leur position, des contacts électriques.

Un système de rupture brusque permet la coupure, puis l'établissement d'un contact, sans chevauchement avec le contact précédent.

On notera qu'à la figure 12 on a représenté en haut le mécanisme 4 de la figure 2, une sortie S1 étant aménagée dans le boîtier 9, pour le raccordement du flexible 5, permettant la transmission du mouvement rotatif au réducteur indirectement par le moteur M. Bien entendu, le mécanisme 4 est pourvu d'une vis 50 et d'une bague 51 selon l'invention.

La transmission du déplacement des curseurs 110 et de la plaque 118 sur laquelle ils sont montés se fait par l'intermédiaire d'un ressort de torsion 112 attelé à la roue 24 et au support, ce qui permet d'arrêter les curseurs 110 à des endroits fixes 113 sur des pistes électriques, par l'intermédiaire d'un pion d'accrochage 114 sollicité par un ressort 114' pour coopération avec des indentations solidaires du boîtier (figure 12). On notera (figure 12) que les endroits fixes ou contacts fixes 113 sont disposés de manière à ce que le curseur, par ses deux plots, soit au contact simultanément avec au plus deux pistes fixes.

Lorsque le moteur M est alimenté, la roue entraîne la tige 40 et bande le ressort 112, le support 118, monté à rotation autour de la roue 24, restant fixe grâce au pion 114.

Lorsque la face 116 de la roue touche la face 117 du support 118, le pion d'accrochage 114 quitte l'indentation du boîtier et libère le support 118 qui, sous l'effort de rappel du ressort 112 se détendant, reprend sa position initiale par rapport à la roue 24 entraîneuse, le pion 114 coopérant avec une nouvelle indentation.

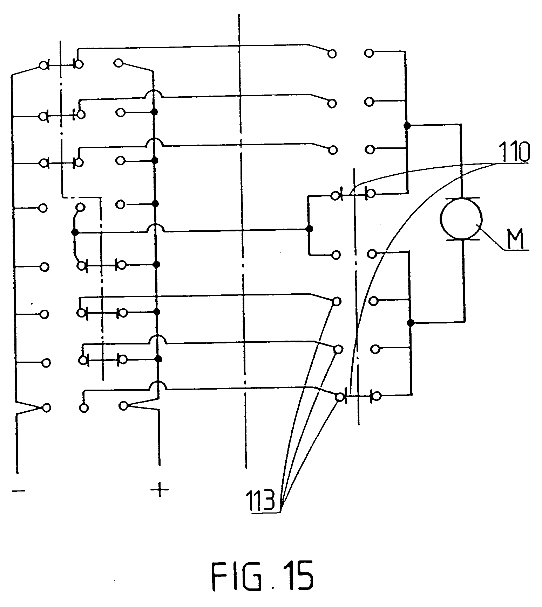

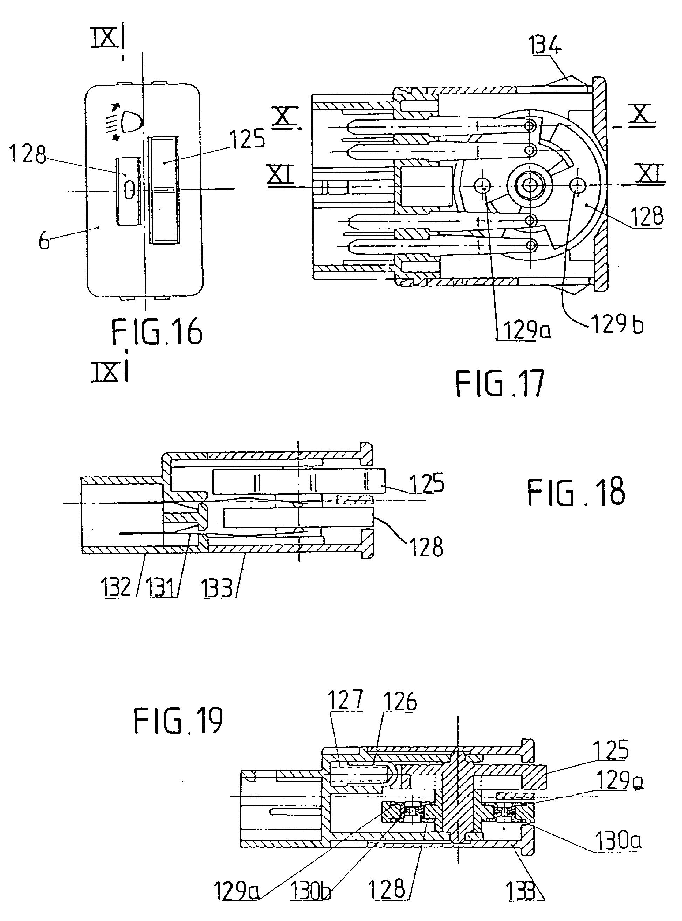

On notera que la face 116 appartient à une protubérance axiale et que la face 117 délimite une échancrure dans laquelle pénètre la face 116. Pendant cette manoeuvre, les curseurs 110 ont quitté les premiers contacts fixes 113.1, et sont passés sur des nouveaux contacts fixes 113 suivant le schéma électrique des figures 15 et 16. Dès que les curseurs 110 ont quitté les contacts fixes 113, l'alimentation du moteur M se trouve coupée. Si le nouveau contact 113 est sous tension, le moteur M redémarre. Si ce dernier contact n'est pas alimenté, le système reste en position d'arrêt. On notera que la partie gauche de la figure 15 correspond au schéma du sélecteur 6 décrit ci-après.

Les modes de réalisation des figures 4 et 8 fonctionnent de manière analogue, le moteur M étant alimenté de manière discrète, comme montré dans le schéma de la figure 10 où on a représenté en développé l'alimentation.

Dans le schéma toutes les pistes 33 sont alimentées en permanence sauf celle qui correspond à la position choisie par le sélecteur 6. L'arrangement des pistes 33 est tel que l'écart entre les deux projecteurs est réduit au minimum. Dans cette solution, la liaison entre le sélecteur 6 et l'actionneur 2,4 se fait pas six fils et la tige peut occuper quatre positions comme schématisé à la figure 11 et montré dans la table de vérité de la figure 10.

On se réfère maintenant aux figures 16 à 19 qui décrivent le boîtier de commande ou sélecteur 6 qui permet la programmation d'un des niveaux, par exemple 0, 1, 2, 3, choisi par le conducteur lorsqu'il veut régler ses projecteurs en fonction de la charge de son véhicule.

Dans toutes les réalisations le sélecteur 6 se compose :
– d'une roue de commande 125 qui, sur sa zone manipulable, a des parties en relief et en creux pour faciliter la rotation ; sa position angulaire est indexée par un pion 126 rappelé par un ressort 127 se logeant dans les crans de la roue 125 ;
– d'une roue de position 128 liée angulairement à la roue 125 par une nervure s'engageant dans une gorge. Sur sa partie visible sont marqués des chiffres 0-1-2-3 correspondant aux différentes positions de la roue 125. Pour chaque position correspond une commutation électrique spécifique obtenue par deux pistes droites 129a et 129b et deux pistes gauches 130a et 130b. Les pistes 129a et 130a sont reliées électriquement et fixées sur la roue de position 128 par sertissage à partir d'extrudés de la piste.

Le même assemblage est réalisé pour les pistes 129b et 130b. Dans le cas de la figure 11 huit lames 131 fixes sont en contact, suivant la position de la roue 128, sur les pistes 129a, 130a, 129b, 130b, ou sur la roue de position 128. L'extrémité opposée de chaque lame 131 se termine par une languette plate avec sa patte d'accrochage, ce qui permet leur fixation sur le boîtier 132 et leur raccordement avec un connecteur standard du commerce. Le boîtier 132 permet, par clipsage, les différentes pièces étant avantageusement en matière plastique comme le boîtier 9 des figures 4, 8 et 11, le maintien de l'ensemble des roues 125 et 128 ainsi qu'un plastron 133. Le boîtier 132 permet par ailleurs le logement du pion 120. Comme visible à la figure 19, la roue 125 possède un fût doté à chacune de ses extrémités d'un téton engagé chacun dans une ouverture complémentaire du boîtier 132. C'est sur ce fût qu'est monté la roue 128. On notera que seule la roue 125 est en saillie par rapport au plastron 133.

Sur les faces latérales du haut et du bas de ce plastron 133 deux pattes élastiques 134 venant de moulage permettent la fixation de l'ensemble sur un ajour du véhicule.

Le dispositif de réglage à organe 50 et bague 51 fonctionne de la manière suivante.

Grâce à la disposition de l'ouverture 60 sur la face latérale et à la conformation de l'orgne 50 en appui sur l'embout 67, on peut réaliser le réglage initial à l'aide d'un robot coopérant avec les six pans creux de la tête 54.

Par vissage ou dévissage de l'organe 50 on règle initialement, par exemple en usine, le projecteur dans des conditions fixées par les règlements.

Durant ce réglage la bague 51 entraîne, par l'intermédiaire de ses rainures 66, les tétons 65. La roue 24 n'étant pas entraînée par le moteur M et étant fixe en rotation, un mouvement de translation de la tige 40 se produit par coopération de son filetage 41 avec le filetage 26 de la roue 24.

En fonctionnement normal, la tige 40 est entraînée par le filetage 26 de la roue 24, elle-même actionnée par le moteur M lorsque celui-ci est alimenté, et est immobilisée en rotation grâce aux tétons 65 et aux rainures 66. On appréciera que la bague 51, en fonctionnement normal, est bloquée en rotation du fait que l'organe 50 forme avec la bague 51 une disposition à roue et vis sans fin.

Dans le cas de la variante de la figure 8, lorsque par exemple en hiver la tige 40b se bloque, en actionnant la roue 24 on comprime le ressort 73, dès que l'on dépasse la précontrainte de celui-ci, par coulissement de la bague 75 sur la tige 40B. Une limitation de l'effort est ainsi obtenue, la tige ne risquant pas d'endommager le projecteur. Suivant le sens de rotation de la roue 24 on déplace la rondelle 72, ou 74, l'autre restant immobile.

On appréciera la sûreté de la disposition selon l'invention, car si l'on visse de trop au réglage l'organe 50, les dents 53 s'échappent des dentures 52 et l'on visse dans le vide. Aucune détérioration n'est donc à craindre.

Simultanément on contraint la languette 62, par coopération avec l'une des butées 63,64, suivant le sens de rotation.

Il est possible, dès que l'on revisse en sens inverse, de venir en prise avec les dents 52 car la languette 62 se détend et permet un rappel de la bague 51.

Ainsi qu'il ressort à l'évidence de la description, la bague 51 sert au calage axial de la roue 24.

On notera que le pion 29, de faible taille, permet d'avoir des pistes 33 de taille maximale et que le palier 30, de faible taille également, positionne la plaque 32 montée par introduction en biais pour pénétration des lames 35 dans l'excroissance 36.

Toutes ces dispositions favorisent le montage du boîtier par simple rapprochement axial de ces deux parties.

Bien entendu, la présente invention n'est pas limitée aux exemples de réalisations décrits, par exemple, au lieu d'une commande à sélecteur, on peut utiliser une commande par capteur de position.

Le réducteur peut consister en un train d'engrenages.

Bien sûr, le réglage peut se faire à la main.

L'organe 50 n'est pas forcément disposé verticalement. Il peut, du fait qu'il est disposé tangentiellement par rapport à la bague 51, être monté de manière inclinée et traverser la face latérale L en un autre endroit que sa portion sommitale S.

On peut inverser le rôle du pion 29 et du palier 30, le palier 30 pouvant être porté par la roue 24, comme visible à la figure 11.

Le positionnement de la bague 51 par rapport à la roue 24 peut être inversé, la vis 50 étant portée par la partie 11 du boîtier 9 portant la face arrière A. Dans ce cas, la tige 40 pénètre à l'intérieur de la bague 51 qui porte alors le pion 29, tandis qu'elle traverse la roue 24, les positions relatives du filetage 41 et des tétons 65 étant inversées.

Enfin il est possible de monter le dispositif sur une moto ne comportant qu'un projecteur. Ceci est rendu possible par la compacité du dispositif, les pièces de la moto pouvant venir au plus près de la face arrière et, malgré cela, un réglage initial est rendu possible grâce à la disposition selon l'invention.

## Revendications

1. Dispositif de commande d'orientation pour projecteur de véhicule automobile, du type comprenant un mécanisme réducteur (8) logé à l'intérieur d'un boîtier (9), à faces frontale (F) et arrière (A) reliées par une face latérale (L), et propre à être actionné directement ou indirectement par un actionneur à moteur électrique (M) pour entraînement sans rotation d'une tige mobile axialement (40), vers l'une ou l'autre desdites faces frontale (F) et arrière (A), dont chaque position correspond à une orientation angulaire du projecteur, dans lequel le boîtier (9) présente une ouverture (60) traversée par un organe accessible de réglage (50) de la position initiale du projecteur, dit organe de réglage (50), porté par ledit boîtier (9) et propre à coopérer avec un élément de réglage (51) relié à la tige (40), ledit organe de réglage (50) présentant une tête (54) pour sa manoeuvre, tandis que l'élément de réglage (51) est logé au moins en partie à l'intérieur du boîtier (9), caractérisé en ce que, en combinaison :

a) l'organe de réglage (50) traverse une ouverture (60) pratiquée dans la face latérale (L) du boîtier (9) ;

b) l'organe de réglage (50) est disposé tangentiellement par rapport à une bague de réglage (51) logée dans le boîtier (9) et constituant l'élément de réglage ;

c) l'organe de réglage (50) présente une portion filetée (53) tandis que la bague de réglage (51) présente extérieurement des dentures (52), lesdites dentures (52) et ladite portion filetée (53) étant conformées pour former un système à roue et vis sans fin irréversible ;

d) la bague de réglage (50) entoure la tige (40) et est en prise avec celle-ci par des moyens de liaison en rotation autorisant un déplacement axial relatif de la tige (40) par rapport à la bague de réglage (51).

2. Dispositif selon la revendication 1, caractérisé en ce que l'ouverture (60) est formée à la faveur d'un embout (67) solidaire du boîtier (9) et en ce que la tête (54) de l'organe de réglage (50) présente une partie inférieure évidée (68) pour coopération avec la partie supérieure de l'embout (67).

3. Dispositif selon la revendication 1 ou 2, dans lequel le boîtier (9) est en matière plastique, caractérisé en ce que l'ouverture (60) est formée à la faveur d'un embout (67) solidaire du boîtier (9) par moulage et par enlèvement de matière dans la portion sommitale (S) de la face latérale (L).

4. Dispositif selon l'une quelconque des revendications 1 à 3, caractérisé en ce que l'organe de réglage (50) consiste en une vis avec une extrémité (55) de forme profilée, qui se raccorde par une portion cylindrique de diamètre réduit à la partie filetée (53) de la vis (50) et en ce que ladite extrémité (55) traverse une ouverture (57) du boîtier (9) pour montage de la vis (50) par simple engagement axial et clipsage.

5. Dispositif selon l'une quelconque des revendications 1 à 4, caractérisé en ce que la bague de réglage (51) présente une portion lisse (61) interrompant les dentures (52).

6. Dispositif selon la revendication 5, caractérisé en ce que la portion lisse (61) porte un élément élastique (62) propre à coopérer avec des butées (63,64) solidaires du boîtier (9).

7. Dispositif selon la revendication 6, caractérisé en ce que la bague de réglage (51) est en matière plastique et en ce que l'élément élastique (62) consiste en une languette longitudinale à protubérance radiale découpée dans la portion lisse (61) de la bague de réglage (51).

8. Dispositif selon l'une quelconque des revendications précédentes, caractérisé en ce que la bague de réglage (51) est engagée dans un alésage (43) d'un manchon (44) porté par le boîtier (9) et en ce que ledit manchon (44) présente une lumière (69) pour coopération de la portion filetée (53) de la bague de réglage (51) avec les dentures (52) de l'organe de réglage (50).

9. Dispositif selon l'une quelconque des revendications précédentes, caractérisé en ce que lesdits moyens de liaison en rotation consistent en deux tétons diamètralement opposés (65) portés par la tige (40) et coopérant avec des rainures complémentaires (66) formées dans l'alésage interne de la bague (51).

10. Dispositif selon l'une quelconque des revendications précédentes, caractérisé en ce que la tige (40) est en deux parties (40A,40B) reliées entre elles par un limiteur d'effort longitudinal à ressort (70 à 75) et en ce que l'une desdites parties (40A,40B) est en prise avec la bague de réglage (51).

11. Dispositif selon l'une quelconque des revendications précédentes, dans lequel le mécanisme réducteur (8) présente une roue creuse (24) entraînant la tige (40,40A,40B), ladite roue (24) étant dotée d'un manchon (25), caractérisé en ce que la bague de réglage (51) constitue un moyen de calage axial de ladite roue (24) entre les faces frontale (F) et arrière

(A) du boîtier (9) et en ce que la tige (40) présente une partie filetée (41) propre à coopérer avec un filetage (26) formé dans l'alésage interne du manchon (25) de la roue (24).

12. Dispositif selon la revendication 11, caractérisé en ce que le boîtier (9) est en deux parties (10,11) et en ce que l'organe de réglage (50) est porté à rotation par la partie (10) présentant la face frontale (F), tandis que la roue creuse (24) du mécanisme réducteur (8) est portée par l'autre partie (11) présentant la face arrière (A) et en ce que ladite roue (24) porte des curseurs (37,38) ou des plots propres à coopérer avec des pistes (33) pour l'alimentation du moteur électrique (M).

13. Dispositif selon la revendication 11, caractérisé en ce que le boîtier (9) est en deux parties (10,11) et en ce que l'organe de réglage (50) est porté à rotation par la partie (11) présentant la face arrière (A).

**Patentansprüche**

1. Einrichtung zur Regelung und Einstellung der Neigung eines kraftfahrzeug-Scheinwerfers, enthaltend einen im Innern eines Gehäuses (9) untergebrachte Untersetzungsmechanismus (8) mit einer Vorderseite (F) und einer Rückseite (A), die durch eine Seitenfläche (L) verbunden sind, und geeignet für die direkte oder indirekte Betätigung durch eine elektromotorisch betriebene Betätigungsvorrichtung (M) für den rotationsfreien Antrieb einer axial beweglichen Stange (40) in Richtung auf die Vorderseite (F) bzw. Rückseite (A), deren Positionen jeweils einer Winkelneigung des Scheinwerfers entspricht, wobei das Gehäuse (9) eine Öffnung (60) aufweist, durch die ein zugängliches Einstellorgan (50) für die Anfangsposition des Scheinwerfers hindurchtritt, welches als Einstellorgan (50) bezeichnet wird und auf dem genannten Gehäuse (9) ruht und zum Zusammenwirken mit einem mit der Stange (40) verbundenen Einstellelement (51) geeignet ist, während das genannte Einstellorgan (50) einen kopf (54) zum Manövrieren aufweist, wogegen das Einstellelement (51) wenigstens teilweise im Innern des Gehäuses (9) untergebracht ist, **dadurch gekennzeichnet,** daß in kombination:

a) das Einstellorgan (50) durch eine in der Seitenfläche (L) des Gehäuses (9) angebrachte Öffnung (60) hindurchtritt,

b) das Einstellorgan (50) im Verhältnis zu einem Einstellring (51), der im Gehäuse (9) untergebracht ist und das Einstellelement bildet, tangential angeordnet ist,

c) das Einstellorgan (50) einen Gewindeteil (53) aufweist, während der Einstellring (51) außen Verzahnungen (52) aufweist, wobei die genannten Verzahnungen (52) und der genannte Gewindeteil (53) so ausgebildet sind, daß sie ein nicht umkehrbares Schneckenradsystem bilden,
d) der Einstellring (50) die Stange (40) umgibt und mit dieser über drehbewegliche Verbindungsmittel in Eingriff steht, wodurch gegenüber der Stange (40) eine axiale Verschiebung im Verhältnis zum Einstellring (51) möglich wird.

2. Einrichtung nach Anspruch 1, **dadurch gekennzeichnet,** daß die Öffnung (60) in einem fest mit dem Gehäuse (9) verbundenen Ansatz (67) ausgebildet ist und daß der kopf (54) des Einstellorgans (50) einen ausgesparten unteren Teil (68) aufweist, der mit dem oberen Teil des Ansatzes (67) zusammenwirkt.

3. Einrichtung nach Anspruch 1 oder 2, wobei das Gehäuse (9) aus kunststoff besteht, **dadurch gekennzeichnet,** daß die Öffnung (60) in einem Ansatz (67) ausgebildet ist, der mit dem' Gehäuse (9) durch Formpressen und durch Materialabtrag im Scheitelbereich (S) der Seitenfläche (L) fest verbunden ist.

4. Einrichtung nach einem der Ansprüche 1 bis 3, **dadurch gekennzeichnet,** daß das Einstellorgan (50) aus einer Schraube mit einem profilförmigen Ende (55) besteht, welches mit einem zylindrischen Teil von reduzieitem Durchmesser mit dem Gewindeteil (53) der Schraube (50) verbunden ist, und daß das genannte Ende (55) zur Anbringung der Schraube (50) durch einfachen axialen Eingriff und Einrastung quer durch eine Öffnung (57) im Gehäuse (9) verläuft.

5. Einrichtung nach einem der Ansprüche 1 bis 4, **dadurch gekennzeichnet,** daß der Einstellring (51) einen glatten Teil (61) aufweist, der die Verzahnungen (52) unterbricht.

6. Einrichtung nach Anspruch 5, **dadurch gekennzeichnet,** daß der glatte Teil (61) ein elastisches Element (62) trägt, welches zum Zusammenwirken mit fest mit dem Gehäuse (9) verbundenen Anschlägen (63, 64) geeignet ist.

7. Einrichtung nach Anspruch 6, **dadurch gekennzeichnet,** daß der Einstellring (51) aus kunststoff besteht und daß das elastische Element (62) aus einer radial ausgestülpten Längszunge besteht, die im glatten Teil (61) des Einstellrings (51) ausgeschnitten,ist.

8. Einrichtung nach einem der vorherigen Ansprüche, **dadurch gekennzeichnet,** daß der Einstellring (51) in eine Bohrung (43) einer auf dem Gehäuse (9) ruhenden Muffe (44) eingreift und daß die genannte Muffe (44) einen Schlitz (69) für das Zusammenwirken des Gewindeteils (53) des Einstellrings (51) mit den Verzahnungen (52) des Einstellorgans (50) aufweist.

9. Einrichtung nach einem der vorherigen Ansprüche, **dadurch gekennzeichnet,** daß die genannten Mittel zur drehbeweglichen Verbindung aus zwei einander diametral gegenüberliegenden Zapfen (65) bestehen, die auf der Stange (40) ruhen und mit ergänzenden Rillen (66) zusammenwirken, die in der Innenbohrung des Rings (51) ausgebildet sind.

10. Einrichtung nach einem der vorherigen Ansprüche, **dadurch gekennzeichnet,** daß die Stange (40) aus zwei Teilen (40A, 40B) besteht, die miteinander durch einen federbetätigten Längskraftbegrenzer (70 bis 75) verbunden sind, und daß einer der genannten Teile (40A, 40B) mit dem Einstellring (51) in Eingriff steht.

11. Einrichtung nach einem der vorherigen Ansprüche, wobei der Untersetzungsmechanismus (8) ein Hohlrad (24) zum Antrieb der Stange (40, 40A, 40B) aufweist, wobei das Rad (24) mit einer Muffe (25) ausgerüstet ist, **dadurch gekennzeichnet,** daß der Einstellring (51) ein Mittel zur axialen Verkeilung des genannten Rads (24) zwischen der Vorderseite (F) und der Rückseite (A) des Gehäuses (9) bildet und daß die Stange (40) einen Gewindeteil (41) aufweist, der zum Zusammenwirken mit einem Gewinde (26) geeignet ist, welches in der Innenbohrung der Muffe (25) des Rads (24) ausgebildet ist.

12. Einrichtung nach Anspruch 11, **dadurch gekennzeichnet,** daß das Gehäuse (9) aus zwei Teilen (10, 11) besteht und daß das Einstellorgan (50) drehbeweglich auf dem Teil (10) aufliegt, woran sich die Vorderseite (F) befindet, während das Hohlrad (24) des Untersetzungsmechanismus (8) auf dem anderen Teil (11) aufliegt, welches die Rückseite (A) aufweist, und daß das genannte Rad (24) Schieber (37, 38) oder Stifte aufweist, die geeignet sind, mit Bahnen (33) zur Versorgung des Elektromotors (M) zusammenzuwirken.

13. Einrichtung nach Anspruch 11, **dadurch gekennzeichnet,** daß das Gehäuse (9) aus zwei Teilen (10, 11) besteht und daß das Einstellorgan ( 50) drehbeweglich auf dem Teil (11) mit der Rückseite (A) aufliegt.

**Claims**

1. Apparatus for controlling the orientation of a motor vehicle headlamp, of the type comprising a speed reducer mechanism (8) mounted within a housing (9) having a front face (F) and a rear face (A) joined by a side face (L), the speed reducer mechanism being adapted to be actuated directly or indirectly by an actuator comprising an electric motor (M) for driving a movable rod (40) axially and without rotation towards one or other of the said front face (F) and rear face (A), each position of which rod corresponds to an angular orientation of the headlamp, wherein the housing (9) has an aperture (60) through which an accessible adjusting member (50), for adjusting the initial position of the headlamp, extends, the said adjusting member (50) being carried by the said housing (9) and being adapted to cooperate with an adjusting element (51) coupled to the rod (40), the said adjusting member (50) having a head (54) for manoeuvring it, while the adjusting element (51) is mounted at least partly within the housing (9), characterised in that, in combination:

(a) the adjusting member (50) extends through an aperture (60) formed in the side face (L) of the housing (9);

(b) the adjusting member (50) is disposed tangentially with respect to an adjusting ring (51) mounted in the housing (9) and constituting the adjusting element;

(c) the adjusting member (50) has a threaded portion (53), while the adjusting ring (51) has external teeth (52), the said teeth (52) and the said threaded portion (53) being conformed with each other so as to constitute an irreversible worm and worm wheel system;

(d) the adjusting ring (51) surrounds the rod (40) and is in engagement with the latter through rotary coupling means such as to enable the rod (40) to be displaced axially with respect to the adjusting ring (51).

2. Apparatus according to Claim 1, characterised in that the aperture (60) is formed in a boss (67) which is fixed with respect to the housing (9), and in that the head (54) of the adjusting member (50) has a lower part (68) which is recessed for cooperation with the upper part of the boss (67).

3. Apparatus according to Claim 1 or Claim 2, in which the housing (9) is of a plastics material, characterised in that the aperture (60) is formed in a boss (67) formed integrally with the housing (9) by moulding and by upsetting material in the topmost portion (S) of the side face (L).

4. Apparatus according to any one of Claims 1 to 3, characterised in that the adjusting member (50) comprises a screw having a profiled end (55), which is joined through a cylindrical portion of reduced diameter to the threaded portion (53) of the screw (50), and in that the said end (55) extends through an opening (57) in the housing (9) whereby the screw (50) can be fitted by simple axial and snap-fit engagement.

5. Apparatus according to any one of Claims 1 to 4, characterised in that the adjusting ring (51) has a smooth portion (61) interrupting the teeth (52).

6. Apparatus according to Claim 5, characterised in that the smooth portion (61) carries a resilient element (62) adapted to cooperate with stop elements (63, 64) which are fixed with respect to the housing (9).

7. Apparatus according to Claim 6, characterised in that the adjusting ring (51) is of a plastics material, and in that the resilient element (62) comprises a longitudinal tongue projecting radially and recessed in the smooth portion (61) of the adjusting ring (51).

8. Apparatus according to any one of the preceding Claims, characterised in that the adjusting ring (51) is engaged in a bore (43) of a sleeve (44) carried by the housing (9), and in that the said sleeve (44) has an aperture (69) for cooperation of the threaded portion (53) of the adjusting ring (51) with the teeth (52) of the adjusting member (50).

9. Apparatus according to any one of the preceding Claims, characterised in that the said rotary coupling means comprise two diametrically opposed bosses (65) carried by the rod (40) and cooperating with complementary grooves (66) formed in the internal bore of the ring (51).

10. Apparatus according to any one of the preceding Claims, characterised in that the rod (40) is in two parts (40A, 40B), which are joined together through a spring-type longitudinal force limiter (70 - 75), and in that one of the said parts (40A, 40B) is in engagement with the adjusting ring (51).

11. Apparatus according to any one of the preceding Claims, in which the reducer mechanism (8) includes a hollow wheel (24) driving the rod (40, 40A, 40B), the said wheel (24) having a sleeve portion (25), characterised in that the adjusting ring (51) constitutes a means for the axial location of the said wheel (24) between the front face (F) and the rear face (A) of the housing (9), and in that the rod (40) has a threaded portion (41) for cooperation with a screw thread (26) formed in the internal bore of the sleeve (25) of the wheel (24).

12. Apparatus according to Claim 11, characterised in that the housing (9) is in two parts (10, 11), and in that the adjusting member (50) is carried for rotation by the part (10) having the front face (F), while the hollow wheel (24) of the reducer mechanism (8) is carried by the other part (11) having the rear face (A), and in that the said wheel (24) carries wiping elements (37, 38) or contacts arranged to cooperate with contact surfaces (33) for supplying power to the electric motor (M).

13. Apparatus according to Claim 11, characterised in that the housing (9) is in two parts (10, 11), and in that the adjusting member (50) is carried for rotation by the part (11) having the rear face (A).

RABATTEMENT

FIG.1

FIG. 2

FIG. 3

FIG 4

FIG. 5

FIG. 6

FIG. 7

FIG. 8

FIG.9

FIG.10

FIG.11

FIG .12

FIG.13

FIG.14

FIG. 15

FIG.16

FIG.17

FIG.18

FIG.19